(19) Europäisches Patentamt
European Patent Office
Office européen des brevets

(11) **EP 1 489 403 A1**

(12) **EUROPEAN PATENT APPLICATION**
published in accordance with Art. 158(3) EPC

(43) Date of publication:
**22.12.2004 Bulletin 2004/52**

(51) Int Cl.⁷: **G01N 21/05**, G01N 37/00,
G01N 21/64, G01N 21/59

(21) Application number: **03712705.7**

(22) Date of filing: **14.03.2003**

(86) International application number:
**PCT/JP2003/003073**

(87) International publication number:
**WO 2003/078979 (25.09.2003 Gazette 2003/39)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **20.03.2002 JP 2002079219**

(71) Applicants:
• **Nippon Sheet Glass Co., Ltd.**
  **Osaka-shi, Osaka 541-8559 (JP)**
• **Institute of Microchemical Technology**
  **Kawasaki-shi, Kanagawa 213-0012 (JP)**

(72) Inventors:
• **YAMAGUCHI, Jun**
  **c/o Nippon Sheet Glass Co., Ltd.**
  **Osaka-shi, Osaka 541-8559 (JP)**
• **HATTORI, Akihiko**
  **c/o Nippon Sheet Glass Co., Ltd.**
  **Osaka-shi, Osaka 541-8559 (JP)**
• **KITAMORI, Takehiko**
  **Bunkyo-ku, Tokyo 113-0033 (JP)**
• **TOKESHI, Manabu**
  **Kawasaki-shi, Kanagawa 213-0012 (JP)**

(74) Representative: **Kohler Schmid Möbus**
**Patentanwälte**
**Ruppmannstrasse 27**
**70565 Stuttgart (DE)**

(54) **MICRO-CHEMICAL SYSTEM-USE CHIP AND MICO-CHEMICAL SYSTEM**

(57)    A microchemical system chip and a microchemical system that can be reduced in size while improving measurement sensitivity. The microchemical system chip 1 is comprised of a plate-shaped glass substrate 10, and the glass substrate 10 has a U-shaped channel 11 therein. The U-shaped channel 11 is comprised of a longitudinal channel 11a, and a pair of transverse channels 11b and 11c that are connected to the two ends of the longitudinal channel 11a. The glass substrate 10 has therein two voids provided coaxially with the longitudinal channel 11a near the two ends of the longitudinal channel 11a, and gradient index rod lenses 14 and 15 are housed respectively in the two voids. An optical fiber 16 that propagates detecting light emitted from a light source is connected to the gradient index rod lens 14, and an optical fiber 17 that leads detecting light received by the gradient index rod lens 15 to a detector is connected to the gradient index rod lens 15.

FIG. 1A

FIG. 1B

EP 1 489 403 A1

## Description

Technical Field

The present invention relates to a microchemical system chip and a microchemical system, and in particular relates to a microchemical system chip which can be used in microchemical systems that enable high-precision ultramicroanalysis to be carried out in very small spaces, which enables measurement to be carried out conveniently in any chosen location, and which in particular can be used when implementing absorptiometry or fluorescence analysis, and to a microchemical system using such a microchemical system chip.

Background Art

In recent years, integration technology for carrying out chemical reactions in very small spaces has attracted attention in view of the speeding up of chemical reactions, and the need to carry out reactions using very small amounts, on-site analysis and so on, and research into this technology has been carried out with vigor throughout the world.

Microchemical systems, which are one example of such chemical reaction integration technology, are systems whose objective is to carry out any of mixing, reaction, separation, extraction and detection on a sample contained in a sample solution (a liquid-borne sample) in a very fine channel formed in a small glass substrate or the like. A microchemical system may have only a single function such as being for only separation of liquid-borne samples, or may have a combination of a plurality of functions. Examples of reactions carried out in microchemical systems are diazotization reactions, nitration reactions, and antigen-antibody reactions, and examples of extraction/separation are solvent extraction, electrophoretic separation, and column separation.

As an electrophoresis apparatus that is for only separation out of the above functions and is for analyzing extremely small amounts of proteins, nucleic acids or the like, one constituted from a channel-formed plate-shaped member that is comprised of two glass substrates joined together and has therein a channel having a channel cross section of approximately $100\mu m \times$ approximately $100\mu m$ has been proposed (see, for example, Japanese Laid-open Patent Publication (Kokai) No. H08-178897). Because the member is plate-shaped, breakage is less likely to occur than in the case of a glass capillary tube having a circular or polygonal cross section, and hence handling is easier.

In such a microchemical system, because the amount of the liquid-borne sample is very small, a highly sensitive detection method is essential. Methods commonly used as such a detection method are absorptiometry in which the amount of absorption by a substance is measured, and fluorescence analysis in which the wavelength or intensity of fluorescence emitted by a substance is measured.

The above absorptiometry is a method in which detecting light is passed into a liquid-borne sample in a channel having a channel cross section of approximately $10\mu m \times$ approximately $100\mu m$ in a direction orthogonal to the channel, and the amount of absorption by the liquid-borne sample is measured using a measuring instrument based on the detecting light transmitted through the liquid-borne sample. In this case, the optical path length of the detecting light through the channel is short at $100\mu m$, which is not sufficient for measuring the amount of absorption by the liquid-borne sample.

To make the optical path length over which the detecting light passes through the liquid-borne sample in the channel sufficiently long, it has thus been proposed to measure the amount of absorption by the liquid-borne sample of light introduced along the channel (see, for example, Anal. Chem. 1996, 68, 1040; Japanese Laid-open Patent Publication (Kokai) No. H09-288090).

Moreover, the above fluorescence analysis is carried out by measuring the wavelength or intensity of fluorescence emitted from a liquid-borne sample upon exciting light being incident on the liquid-borne sample in a tubular cell. In this fluorescence analysis, the exciting light used for exciting the fluorescent substance becomes noise if incident on a measuring optical system during the fluorescence analysis measurements, whereby the measurement sensitivity drops; the exciting light is thus introduced from a direction orthogonal to the tubular cell, and the measuring instrument is installed in a direction orthogonal to both the optical path of the exciting light and the tubular cell, whereby measurement can be carried out without the exciting light being incident on the measuring instrument.

However, with the above absorptiometry, so that the detecting light can be introduced along the channel in the channel-formed plate-shaped member, the detecting light is led to the vicinity of the channel through an optical fiber, an optical waveguide or the like rather than through open space, but in this case the detecting light exiting from the end of the optical fiber, the optical waveguide or the like will spread out through diffraction, and hence the amount of the detecting light introduced into the channel may be insufficient.

Moreover, with the above fluorescence analysis, so that the intensity of fluorescence can be measured well even for a sample solution having a low liquid-borne sample concentration, an introducing lens for efficiently introducing the exciting light onto the liquid-borne sample, and a light-receiving lens for efficiently receiving the fluorescence emitted by the liquid-borne sample are installed, but these lenses are large in size, and hence the apparatus cannot be made small in size.

Moreover, in the case that the channel-formed plate-shaped member has a plurality of channels therein, and measurement is carried out simultaneously on liquid-borne samples flowing through these channels, because the lenses are large in size, the channels must be provided separated from one another, and hence it is difficult to make the apparatus small in size. Furthermore, the distance between each channel and the corresponding light-receiving lens is large, and hence cross-talk in which the fluorescence emitted from the liquid-borne sample flowing through each channel influences the fluorescence emitted from the liquid-borne sample flowing through neighboring channels will arise.

To simultaneously excite the liquid-borne samples in the plurality of channels in the channel-formed plate-shaped member using a single beam of exciting light, the exciting light must be introduced along the plane of the channel-formed plate-shaped member and in a direction orthogonal to the channels, but this is difficult with light propagated through open space, and hence the exciting light is led to the vicinity of the channels by an optical fiber, an optical waveguide or the like (see, for example, Anal. Chem. 1996, 68, 1040; Japanese Laid-open Patent Publication (Kokai) No. H09-288090); in this case, exciting light that has spread out through diffraction from the end of the optical fiber or optical waveguide will be introduced into channels positioned far from the end of the optical fiber or optical waveguide, and hence the fluorescence intensity obtained will drop, and thus the measurement sensitivity will drop.

It is an object of the present invention to provide a microchemical system chip and a microchemical system that can be reduced in size while improving the measurement sensitivity.

Disclosure of the Invention

To attain the above object, in a first aspect of the present invention, there is provided a microchemical system chip for use in a microchemical system that carries out detection by absorptiometry on a product produced through processing of a sample in a liquid, the microchemical system chip characterized by comprising a transparent plate-shaped member having therein a channel through which the liquid containing the sample is passed, an introducing lens through which light is introduced onto the liquid in the channel, and a light-receiving lens through which light exiting from the channel is received, wherein at least one of the introducing lens and the light-receiving lens comprises a rod lens.

In the first aspect of the present invention, preferably, at least one of the introducing lens and the light-receiving lens comprises a gradient index rod lens.

In the first aspect of the present invention, preferably, at least one of the introducing lens and the light-receiving lens is provided inside the plate-shaped member.

In the first aspect of the present invention, preferably, at least one of the introducing lens and the light-receiving lens is provided on a surface of the plate-shaped member.

In the first aspect of the present invention, preferably, a guiding optical system is connected to each of the introducing lens and the light-receiving lens.

In the first aspect of the present invention, preferably, the guiding optical system comprises an optical fiber.

In the first aspect of the present invention, preferably, the guiding optical system comprises an optical waveguide.

In a second aspect of the present invention, there is provided a microchemical system chip for use in a microchemical system that carries out detection by absorptiometry on a product produced through processing of a sample in a liquid, the microchemical system chip characterized by comprising a transparent plate-shaped member having therein a channel through which the liquid containing the sample is passed, an introducing lens through which detecting light is introduced from an end of the channel into the channel in a longitudinal direction of the channel, and a light-receiving lens through which is received the introduced detecting light exiting from the other end of the channel, wherein each of the introducing lens and the light-receiving lens is provided inside the plate-shaped member and comprises a rod lens.

In the second aspect of the present invention, preferably, each of the introducing lens and the light-receiving lens comprises a gradient index rod lens.

In the second aspect of the present invention, preferably, a guiding optical system is connected to each of the introducing lens and the light-receiving lens.

In the second aspect of the present invention, preferably, the guiding optical system comprises an optical fiber.

In the second aspect of the present invention, preferably, the guiding optical system comprises an optical waveguide.

In the second aspect of the present invention, preferably, the plate-shaped member is made of glass.

In a third aspect of the present invention, there is provided a microchemical system characterized by comprising a microchemical system chip according to the first or second aspect of the present invention, introducing means for introducing detecting light onto the introducing lens, receiving means for receiving from the light-receiving lens detecting light received by the light-receiving lens, and calculating means for calculating an intensity of the received detecting light.

In a fourth aspect of the present invention, there is provided a microchemical system chip for use in a microchemical system that carries out detection by fluorescence analysis on a product produced through processing of a sample in a liquid, the microchemical system chip characterized by comprising a transparent plate-shaped member having therein a channel through which the liquid containing the sample is passed, an introducing lens through which exciting light is introduced into the channel from a direction orthogonal to the channel, and a light-receiving lens through which is received fluorescence emitted from the sample in the liquid flowing through the channel due to the introduced exciting light, wherein one of the introducing lens and the light-receiving lens is provided inside the plate-shaped member, and the other of the introducing lens and the light-receiving lens is provided on a surface of the plate-shaped member, and one of the introducing lens and the light-receiving lens comprises a rod lens.

In the fourth aspect of the present invention, preferably, the rod lens comprises a gradient index lens.

In the fourth aspect of the present invention, preferably, the other one of the introducing lens and the light-receiving lens comprises a rod lens.

In the fourth aspect of the present invention, preferably, the other one of the introducing lens and the light-receiving lens comprises a planar lens.

In the fourth aspect of the present invention, preferably, the other one of the introducing lens and the light-receiving lens comprises a gradient index lens.

In the fourth aspect of the present invention, preferably, the light-receiving lens is provided inside the plate-shaped member, and the introducing lens is provided on the surface of the plate-shaped member.

In the fourth aspect of the present invention, preferably, the channel comprises a plurality of channels arranged along an optical axis of the introduced exciting light, the introducing lens is provided inside the plate-shaped member, and the light-receiving lens comprises a plurality of lenses each provided on the surface of the plate-shaped member facing one of the plurality of channels.

In the fourth aspect of the present invention, preferably, the introducing lens comprises a gradient index lens.

In the fourth aspect of the present invention, preferably, the light-receiving lenses each comprise a rod lens.

In the fourth aspect of the present invention, preferably, the light-receiving lenses each comprise a planar lens.

In the fourth aspect of the present invention, preferably, the light-receiving lenses each comprise a gradient index lens.

In the fourth aspect of the present invention, preferably, a guiding optical system is connected to each of the introducing lens and the light-receiving lens.

In the fourth aspect of the present invention, preferably, the guiding optical system comprises an optical fiber.

In the fourth aspect of the present invention, preferably, the guiding optical system comprises an optical waveguide.

In the fourth aspect of the present invention, preferably, the plate-shaped member is made of glass.

In a fifth aspect of the present invention, there is provided a microchemical system characterized by comprising a microchemical system chip according to the fourth aspect of the present invention, introducing means for introducing the exciting light into the introducing lens, receiving means for receiving from the light-receiving lens the fluorescence received by the light-receiving lens, and measuring means for measuring an intensity of the received fluorescence.

Brief Description of the Drawings

FIG. 1 consists of views schematically showing the construction of a microchemical system chip according to a first embodiment of the present invention; specifically:

FIG. 1A is a plan view; and
FIG. 1B is a sectional view taken along line Ib-Ib in FIG. 1A;

FIG. 2 is a block diagram of a microchemical system that uses the microchemical system chip 1 of FIG. 1 and carries out absorptiometry.
FIG. 3 consists of views schematically showing the construction of a microchemical system chip according to a second embodiment of the present invention; specifically:

FIG. 3A is a perspective view; and
FIG. 3B is a sectional view taken along line IIb-IIb in FIG. 3A;

FIG. 4 is a view useful in explaining a planar lens that can be used in the microchemical system chip 2 of FIG. 3;
FIG. 5 is a conceptual diagram of a microchemical system that uses the microchemical system chip 2 of FIG. 3 and carries out fluorescence analysis;
FIG. 6 is a view schematically showing the construction of a microchemical system chip according to a third embodiment of the present invention; and
FIG. 7 is a view schematically showing the construction of a microchemical system chip according to a fourth embodiment of the present invention.

Best Mode for Carrying Out the Invention

The constructions of microchemical systems according to embodiments of the present invention will now be described with reference to the drawings. Note, however, that the present invention is not limited to the embodiments described below.

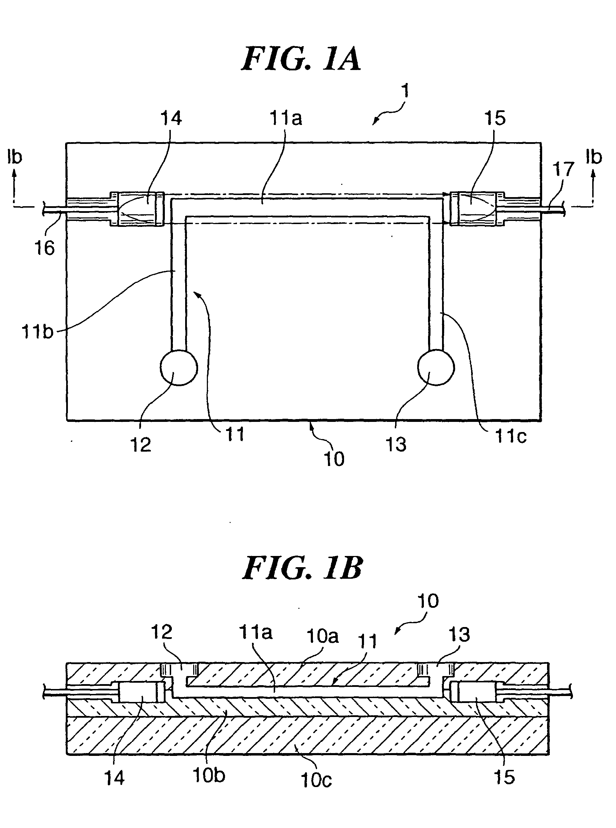

FIG. 1 consists of views schematically showing the construction of a microchemical system chip according to a first embodiment of the present invention; specifically, FIG. 1A is a plan view, and FIG. 1B is a sectional view taken along line Ib-Ib in FIG. 1A;

In FIG. 1, the microchemical system chip 1 according to the first embodiment of the present invention is a chip for use in absorptiometry in which the amount of absorption of detecting light introduced into a channel by a liquid-borne sample in a sample solution flowing through the channel is measured.

The microchemical system chip 1 is comprised of a substantially rectangular plate-shaped glass substrate 10 (plate-shaped member), and the glass substrate 10 has a U-shaped channel 11 therein. The U-shaped channel 11 is comprised of a longitudinal channel 11a, and a pair of transverse channels 11b and 11c that are connected to the two ends of the longitudinal channel 11a. Moreover, the glass substrate 10 has therein an inflow hole 12 that is connected to an end of the transverse channel 11b and opens out at one surface of the glass substrate 10, and a discharge hole 13 that is connected to an end of the transverse channel 11c and opens out at the same surface of the glass substrate 10.

Furthermore, the glass substrate 10 has therein two voids provided coaxially with the longitudinal channel 11a near the two ends of the longitudinal channel 11a, and gradient index rod lenses 14 and 15 are housed respectively in the two voids. An optical fiber 16 that propagates detecting light emitted from a light source, not shown, is connected to the gradient index rod lens 14, and an optical fiber 17 that leads light received by the gradient index rod lens 15 to a detector, not shown, is connected to the gradient index rod lens 15.

In FIG. 1, each of the gradient index rod lenses 14 and 15 is preferably disposed on the longitudinal channel 11a side in the respective void, but does not necessarily have to be in contact with the longitudinal channel 11a side end face of the void; moreover, the gradient index rod lenses 14 and 15 themselves may each form a side face of the U-shaped channel 11 at a site of contact. To introduce the detecting light uniformly into the longitudinal channel 11a, it is preferable for the detecting light exiting from the gradient index rod lens 14 to be parallel.

The glass substrate 10 is comprised of glass substrates 10a to 10c that are placed on one another in three layers and are bonded together; the U-shaped channel 11 is formed through a U-shaped groove being formed in the glass substrate 10b and the glass substrates 10a and 10c being joined to the two surfaces of the glass substrate 10b. Moreover, through holes are formed in the glass substrate 10a in two positions corresponding to the two ends of the U-shaped channel 11, whereby the inflow hole 12 and the discharge hole 13 are formed.

The longitudinal channel 11a forms an analysis cell for analyzing the liquid-borne sample, and the width and depth thereof are each 100μm.

Each of the gradient index rod lenses 14 and 15 is comprised of a cylindrical transparent body in which the refractive index changes continuously from the center thereof outward; such a cylindrical transparent body is known as a converging light-transmitting body in which the refractive index n(r) at a position a distance r in the radial direction from the central axis is given approximately by the quadratic equation in r, n (r) = $n_0\{1-(g^2/2)\cdot r^2\}$,

wherein $n_0$ represents the refractive index on the axis, and g represents a quadratic distribution constant.

For each of the gradient index rod lenses 14 and 15, if the length $z_0$ thereof is chosen to be in a range of $0 < z_0 < \pi/2g$, then even though the gradient index rod lens has flat end faces, the gradient index rod lens will have the same image formation characteristics as an ordinary convex lens; upon a parallel incident light beam being incident on the gradient index rod lens 14 or 15, a focal point will be formed at a position a distance $s_0$ from the end of the gradient index rod lens 14 or 15 from which the light beam exits, where

$$s_0 = \cot(gz_0)/n_0 g.$$

The gradient index rod lenses 14 and 15 may be manufactured, for example, using the following method.

A rod is formed from a glass having as principal components thereof 57 to 63 mol% of $SiO_2$, 17 to 23 mol% of $B_2O_3$, 5 to 17 mol% of $Na_2O$, and 3 to 15 mol% of $Tl_2O$, and then, in an ion exchange medium such as potassium nitrate, the rod formed from the glass (the glass rod) is subjected to ion exchange between thallium ions and sodium ions in the glass and potassium ions in the ion exchange medium, thus giving a refractive index distribution in the glass rod in which the refractive index decreases continuously from the center of the glass rod outward.

Because each of the gradient index rod lenses 14 and 15 has a cylindrical shape with flat end face, the gradient index rod lens 14 or 15 can easily be attached to an end face of the optical fiber 16 or 17, and moreover the optical axis of the optical fiber 16 or .17 can easily be aligned with that of the gradient index rod lens 14 or 15. Furthermore, the gradient index rod lenses 14 and 15 are small in size, and hence when installing each of the gradient index rod lenses 14 and 15 close to the longitudinal channel 11a, it is not necessary to form a large hole for installing the gradient index rod lens 14 or 15.

In particular, in the case of attaching a gradient index rod lens 14 or 15 having a diameter approximately the same as the diameter of the optical fiber 16 or 17 to the end face of the optical fiber 16 or 17, the gradient index rod lens 14 or 15 can be installed merely by inserting the optical fiber 16 or 17 having the gradient index rod lens 14 or 15 attached to the tip thereof into the void provided close to the respective end of the longitudinal channel 11a coaxially with the longitudinal channel 11a.

The gradient index rod lens 15 installed as described above efficiently receives the residual light from the detecting light that has exited from the gradient index rod lens 14 and passed through the longitudinal channel 11a, whereby noise is reduced, and hence highly sensitive measurement is possible. The residual light received by the gradient index rod lens 15 is propagated to the detector via the optical fiber 17.

According to the first embodiment of the present invention, because the gradient index rod lens 14 is attached to the tip of the optical fiber 16, the detecting light exiting from the optical fiber 16 can be received reliably by the gradient index rod lens 15 which is the light-receiving lens, and hence the measurement sensitivity of the microchemical system chip 1 can be improved; in addition, because the gradient index rod lens 14 is disposed inside the glass substrate 10, the microchemical system chip 1 can be reduced in size. Moreover, to measure the absorption of the detecting light by all of the liquid-borne sample in the sample solution flowing through the longitudinal channel 11a, it is preferable for the detecting light exiting from the optical fiber 16 to be made into parallel light; the focal distance of the gradient index rod lens 14 can be adjusted merely by adjusting the length of the gradient index rod lens 14, and hence by making the length of the gradient index rod lens 14 be the optimum length for the wavelength of the detecting light used, the detecting light can be made into parallel light before being introduced onto the liquid-borne sample flowing through the longitudinal channel 11a.

Considering durability and chemical resistance, the material of the glass substrate 10 is a glass, and considering usage with biological samples such as cell samples, for example in DNA analysis, a glass having high acid resistance and alkali resistance is preferable, specifically a borosilicate glass, a soda lime glass, an aluminoborosilicate glass, a quartz glass or the like. However, if the usage is limited accordingly, then an organic material such as a plastic may be used.

Examples of adhesives that can be used to bond the glass substrates 10a to 10c together include organic adhesives such as acrylic adhesives and epoxy adhesives, for example, an ultraviolet-curing type, a thermosetting type, and a two-liquid-curing type, and inorganic adhesives. Alternatively, the glass substrates 10a to 10c may be fused together by heat fusion.

Furthermore, as guiding optical systems, instead of the optical fibers 16 and 17, for example optical waveguides formed using a flame hydrolysis method may be used. In the flame hydrolysis method, for example, two glass fine particle layers for a lower cladding and a core respectively are deposited on a surface of the glass substrate 10b through flame hydrolysis of silicon tetrachloride and germanium tetrachloride, and then the fine particle layers are modified into transparent glass layers by heating at a high temperature. Next, a core portion having a circuit pattern is formed through photolithography and reactive etching. After that, an upper cladding is formed through flame hydrolysis of silicon tetrachloride. An example of formation of optical waveguides using this method is in J. Lightwave Tech., Vol. 17 (5), 771 (1999). In the above, if the glass substrate 10b and the core portion have suitable refractive indices, then the lower cladding need not be formed. Moreover, an optical waveguide may also be formed by removing a portion of the glass substrate 10b where the optical waveguide is to be formed by etching or the like to a suitable depth in advance coaxial with a center line passing through the center of the longitudinal channel 11a and the gradient index rod lens 14 or 15, and then carrying out flame hydrolysis.

The above description of the material of the glass substrate, the adhesive, and the method of forming optical waveguides also applies to the other embodiments described below.

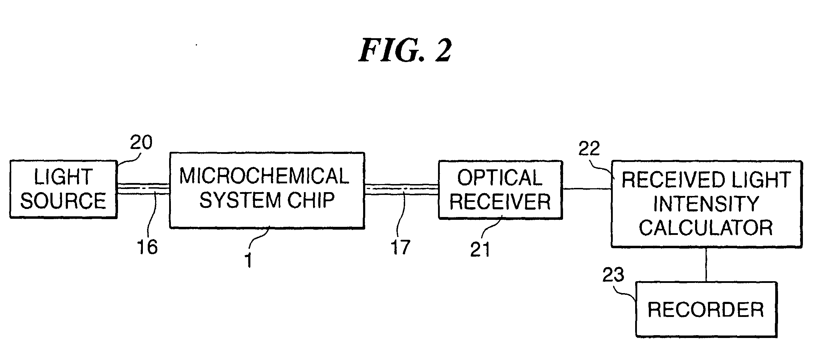

FIG. 2 is a block diagram of a microchemical system that uses the microchemical system chip 1 of FIG. 1 and carries out absorptiometry.

In FIG. 2, detecting light emitted from a light source 20 is introduced via the optical fiber 16 onto the microchemical system chip 1 having the liquid-borne sample therein. The detecting light received by the gradient index rod lens 15 in the microchemical system chip 1 is received by an optical receiver 21 via the optical fiber 17, and is then received by a received light intensity calculator 22. The intensity of the detecting light received by the optical receiver 21 is calculated by the received light intensity calculator 22, and the calculated value is recorded by a recorder 23.

With the absorptiometry apparatus of FIG. 2, the intensity of the detecting light after passing through the longitudinal channel 11a of the microchemical system chip 1 containing a liquid-borne sample of a known concentration is measured in advance, and then the intensity of the detecting light after passing through the longitudinal channel 11a of the microchemical system chip 1 containing a targeted liquid-borne sample is compared with these intensities, whereby the concentration of the targeted liquid-borne sample can be calculated.

To measure the amount of absorption of the detecting light by a liquid-borne sample in a sample solution of low concentration, it is important to make the distance over which the detecting light passes through the targeted liquid-borne sample long, and hence generally the targeted liquid-borne sample is put into a cell of approximately 10mm square, and thus measurement is carried out with the distance d over which the detecting light passes through the liquid-borne sample being 10mm.

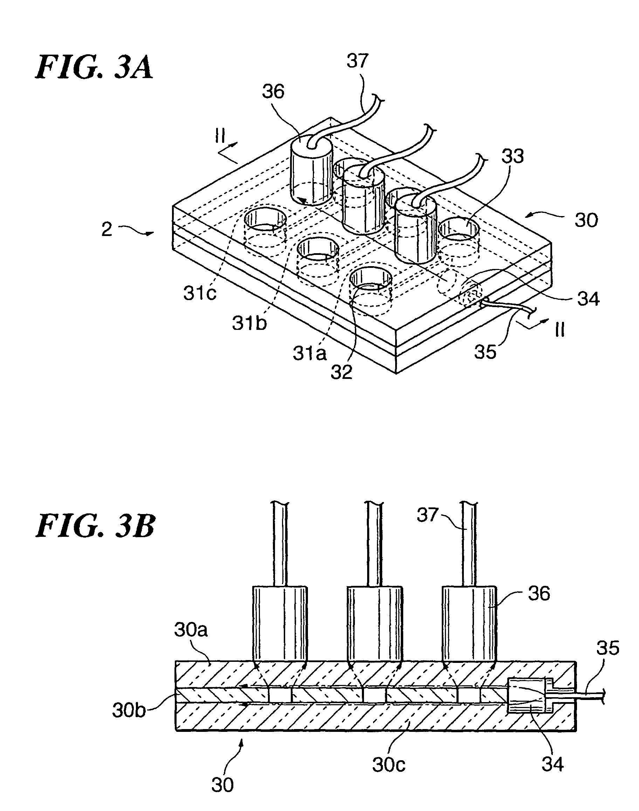

FIG. 3 consists of views schematically showing the construction of a microchemical system chip 2 according to a second embodiment of the present invention; specifically, FIG. 3A is a perspective view, and FIG. 3B is a sectional view taken along line IIb-IIb in FIG. 3A.

In FIG. 3, the microchemical system chip 2 according to the second embodiment of the present invention is a chip for use in fluorescence analysis in which fluorescence emitted upon a liquid-borne sample in a sample solution flowing through channels absorbing exciting light introduced into the channels is measured.

The microchemical system chip 2 is comprised of a substantially rectangular plate-shaped glass substrate 30 (plate-shaped member), and the glass substrate 30 has therein three channels 31a to 31c that are arranged parallel to one another and each extend along the plane of the glass substrate 30 in a direction of short sides of the glass substrate 30. Furthermore, the glass substrate 30 has, for each of the channels 31a to 31c, an inflow hole 32 that is connected to one end of the channel 31a, 31b or 31c and opens out at one surface of the glass substrate 30, and a discharge hole 33 that is connected to the other end of the channel 31a, 31b or 31c and opens out at the same surface of the glass substrate 30.

Furthermore, the glass substrate 30 has a void in one of the short sides thereof near to the center of that short side, the void extending in the direction of long sides of the glass substrate 30, and a gradient index rod lens 34 is housed in the void. An optical fiber 35 that propagates exciting light from a light source, not shown, is connected to the gradient index rod lens 34. Gradient index rod lenses 36 that condense fluorescence emitted by the liquid-borne sample flowing through the channels 31a to 31c are disposed in one surface of the glass substrate 30 in positions facing onto the channels 31a to 31c, and optical fibers 37 that lead the fluorescence condensed by the gradient index rod lenses 36 to a detector, not shown, are connected to the gradient index rod lenses 36.

The glass substrate 30 is comprised of glass substrates 30a to 30c that are placed on one another in three layers and are bonded together; the glass substrate 30b has therein three grooves that pass right through the glass substrate 30b, extend in the direction of the short sides of the glass substrate 30b, and are formed parallel to one another; the channels 31a to 31c are formed through the glass substrate 30a being joined to one surface of the glass substrate 30b and the glass substrate 30c being joined to the other surface of the glass substrate 30b. The channels 31a to 31c are used for mixing, agitation, synthesis, separation, extraction, detection or the like of the liquid-borne sample.

The gradient index rod lenses 36 may be replaced with planar lenses. As a result, gradient index rod lenses 36 will no longer project out from the glass substrate 30, and hence the spectral analyzer can be reduced in size.

Examples of such planar lenses are ones formed in the glass substrate 30 using an ion exchange method or the like, and ones formed by building up a lens medium into a spherical shape on the surface of the glass substrate 30 using an ink jet method, a resist dissolution method or the like.

Moreover, three channels 31a to 31c are provided in the microchemical system chip 2, but the number of channels is not limited thereto.

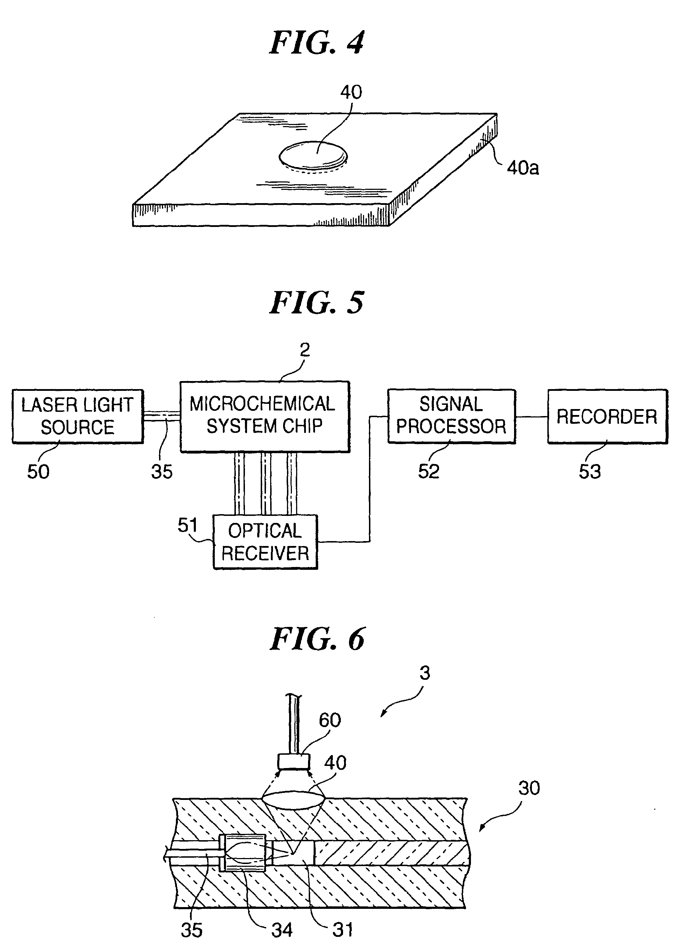

FIG. 4 is a view useful in explaining a planar lens that can be used in the microchemical system chip 2 of FIG. 3.

In FIG. 4, first, one surface of a glass substrate 40a having the same shape and size as the glass substrate 30a shown in FIG. 3 is masked with a metal mask having therein an opening corresponding to a lens region, then the glass substrate 40a is immersed in a $KNO_3$ molten salt to carry out ion exchange treatment between potassium ions and sodium ions on the exposed portion, and then the metal mask is removed, whereby a planar lens 40 having a predetermined refractive index distribution can be formed. The planar lens 40 is convex on the inside of the glass substrate 40a, and also bulges out slightly on the outside of the glass substrate 40a.

In the microchemical system chip 2 of FIG. 3, by replacing the glass substrate 30a with such a glass substrate 40a having planar lenses 40 therein, as described above gradient index rod lenses 36 will no longer project out from the glass substrate 30, and hence the spectral analyzer can be reduced in size.

According to the second embodiment of the present invention, because the gradient index rod lens 34 is attached to the tip of the optical fiber 35, the exciting light exiting from the optical fiber 35 can be received reliably by each of the channels 31a to 31c, and hence the measurement sensitivity of the microchemical system chip 2 can be improved; in addition, because the gradient index rod lens 34 is disposed inside the glass substrate 30, the microchemical system chip 2 can be reduced in size. Moreover, because the gradient index rod lenses 36 that receive fluorescence emitted by the liquid-borne sample in the channels 31a to 31c are attached to a surface of the glass substrate 30, the gap between each of the channels 31a to 31c and the corresponding gradient index rod lens 36 can be shortened, and hence the fluorescence collecting efficiency is improved, and thus highly sensitive measurement becomes possible. Moreover, because the gradient index rod lenses 36 are cylindrical in shape and small in size, the gradient index rod lenses 36 can be arranged with small gaps therebetween on the surface of the glass substrate 30, and hence the microchemical system can be reduced in size.

Note that in FIG. 3, the fluorescence collected by the gradient index rod lenses 36 is led to the detector by the optical fibers 37, but photoelectric converters for detecting the fluorescence may instead be disposed at the focal positions of the gradient index rod lenses 36.

FIG. 5 is a block diagram of a microchemical system that uses the microchemical system chip 2 of FIG. 3 and carries out fluorescence analysis.

In FIG. 5, exciting light emitted from a laser light source 50 is first introduced via the optical fiber 35 into the channels 31a to 31c of the microchemical system chip 2 containing the liquid-borne sample, whereby fluorescence is emitted from the liquid-borne sample in each of the channels 31a to 31c. The fluorescence is then received by each of the gradient index rod lenses 36, and the received fluorescence is received by an optical receiver 51 via the optical fibers 37, and is analyzed by a signal processor 52, and the results are recorded by a recorder 53.

With the microchemical system described above, exciting light of a wavelength that will be absorbed by the liquid-borne sample, which is the substance to be subjected to the measurement, is incident on the liquid-borne sample, and fluorescence thus emitted by the liquid-borne sample is measured, whereby identification or quantification of the liquid-borne sample is carried out. For the amount of light absorbed by the liquid-borne sample, if the intensity of the exciting light incident on the liquid-borne sample is represented by $I_0$ (the incident light intensity), the intensity of the exciting light transmitted by the targeted liquid-borne sample is represented by I (the transmitted light intensity), a represents a coefficient, the concentration of the liquid-borne sample is represented by c, and the distance over which the exciting light is transmitted through the liquid-borne sample is represented by d, then the following equation (1) holds (Lambert-Beer law).

$$A = -\log(I/I_0) = acd \qquad (1)$$

Here, A represents the absorbance, and $I/I_0$ represents the internal transmittance.

Assuming that the amount of fluorescence emitted through the light being absorbed is proportional to the amount of light absorbed, then the fluorescence intensity F is represented by:

$$F = K'(I_0-I) = KI_0(1-e^{-acd})\phi \qquad (2)$$

Here, K represents a constant that depends on the apparatus, for example the area of incidence of the liquid-borne sample, the size and response of the optical receiver 52 and so on, and $\phi$ represents the fluorescence yield, i.e. the ratio of the total amount of fluorescence to the amount of exciting light absorbed. For a liquid-borne sample of low concentration, the following equation thus holds ("Kiki Bunseki" ("Instrumental Analysis"), written by Tanaka and Iida, Shokabo Publishing, 1985, p51).

$$F = KI_0\phi acd \text{ (when acd < 0.05)} \qquad (3)$$

From equation (3), the fluorescence intensity is proportional to the liquid-borne sample concentration c, and hence if a line showing the relationship between F and c (a calibration line) is determined in advance, then an unknown liquid-borne sample concentration can be found out.

To carry out fluorescence measurement on a liquid-borne sample in a sample solution of low concentration, as shown by equation (3), it is important to make the amount of exciting light absorbed by the liquid-borne sample large. The exciting light is thus made to be incident on the liquid-borne sample after being narrowed down by a lens. Moreover, to collect the fluorescence emitted by the liquid-borne sample as much as possible, a condensing lens is placed upstream of the detector. In this case, the smaller the volume of the liquid-borne sample emitting the fluorescence, the more efficiently the fluorescence can be condensed; introducing the exciting light onto the liquid-borne sample after narrowing down the exciting light using a lens is thus important in fluorescence measurement on a liquid-borne sample in a sample solution of low concentration.

In the case that it is not necessary to carry out measurement using all of the channels 31a to 31c simultaneously, because as shown by equation (3) the larger the amount of exciting light incident on the liquid-borne sample the larger the amount of fluorescence emitted by the liquid-borne sample, by making the exciting light not be parallel light but rather focusing the exciting light to a point in one of the channels out of the channels 31a to 31c, a large amount of exciting light can be supplied into that channel, and hence the measurement sensitivity can be improved. Moreover, by focusing the exciting light to a point in one of the channels, the fluorescence emission point becomes smaller in size, and hence the amount of fluorescence condensed by the planar lens 40 can be made larger, and thus the measurement sensitivity can be improved yet further.

FIG. 6 is a view schematically showing the construction of a microchemical system chip according to a third embodiment of the present invention.

For the microchemical system chip 3 according to the third embodiment of the present invention shown in FIG. 6, component elements the same as ones of the microchemical system chip 2 shown in FIG. 3 are represented by the same reference numerals as in FIG. 3, and redundant repeated description will be omitted; in the following, a description will be given of only the differences.

In the microchemical system chip 3, there is one channel 31, and exciting light entering from a gradient index rod lens 34 is focused to a point in the channel 31. Moreover, a lens for condensing fluorescence emitted by a liquid-borne sample in the channel 31 is a planar lens 40, and a photoelectric converter 60 that converts the light condensed by the planar lens 40 into an electrical signal is installed close to the glass substrate 30.

According to the third embodiment of the present invention, a planar lens 40 as shown in FIG. 4 is used as a lens for condensing fluorescence emitted by the liquid-borne sample in the channel 31, and hence there are no longer any projections on the glass substrate 30, and thus the microchemical system can be reduced in size.

In the third embodiment of the present invention, only one set of a channel 31, a gradient index rod lens 34, an optical fiber 35 and a planar lens 40 is provided on the side of one of the short sides of the glass substrate 30, but two sets each of a channel 31, a gradient index rod lens 34, an optical fiber 35 and a planar lens 40 may be provided opposite one another on the two sides of the glass substrate 30.

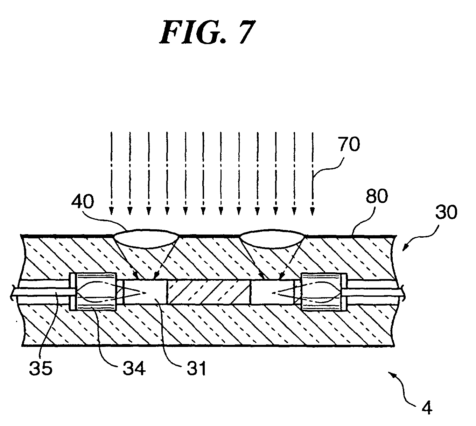

FIG. 7 is a view schematically showing the construction of a microchemical system chip according to a fourth embodiment of the present invention.

For the microchemical system chip 4 according to the fourth embodiment of the present invention shown in FIG. 7, component elements the same as ones of the microchemical system chip 3 shown in FIG. 6 are represented by the same reference numerals as in FIG. 6, and redundant repeated description will be omitted; in the following, a description will be given of only the differences.

The microchemical system chip 4 differs to the microchemical system chip 3 according to the third embodiment shown in FIG. 6 in that the relationship between the exciting light and the fluorescence is reversed, a mask 80 is formed on a surface of the glass substrate 30 on the side on which there are planar lenses 40, but is not formed on the surfaces of the planar lenses 40 themselves, and two sets each of a channel 31, a gradient index rod lens 34, an optical fiber 35, and a planar lens 40 are provided opposite one another on the two sides of the glass substrate 30.

According to the microchemical system chip 4, exciting light emitted from a light source, not shown, is made into spatially parallel light 70 by a collimator, not shown, and the spatially parallel light 70 is incident on the planar lenses 40 which are disposed on the surface of the glass substrate 30 in positions facing onto the channels 31, and is focused into each channel 31 by the corresponding planar lens 40. Fluorescence emitted by the liquid-borne sample at the focal position in each channel 31 is condensed by a gradient index rod lens 34 installed close to that channel 31, and led by an optical fiber 35 to a detector, not shown. The optical fibers 35 in the microchemical system chip 4 preferably have a large core so that as much of the fluorescence as possible can be led to the detector.

With the microchemical system chip 4, spatially parallel light 70 incident at places other than the planar lenses 40 would become noise in the fluorescence analysis, and hence the mask 80 is formed on the surface of the glass substrate 30 to intercept such spatially parallel light 70.

According to the fourth embodiment of the present invention, the exciting light must be made into spatially parallel light 70 by a collimator or the like, and hence the microchemical system increases in size in this respect; nevertheless, each gradient index rod lens 34 for condensing the fluorescence can be installed extremely close to the respective channel 31 from which the fluorescence is emitted, and hence the fluorescence collecting efficiency can be improved, and thus the measurement sensitivity can be improved, while the apparatus can be reduced in size.

In the fourth embodiment of the present invention, the exciting light is led in as spatially parallel light 70, but the exciting light may instead be led separately to each planar lens 40 using a guiding optical system such as an optical fiber.

In each of the second to fourth embodiments of the present invention described above, an optical fiber 35 is connected to each gradient index rod lens 34, but an optical waveguide may be used instead of the optical fiber 35. The optical fiber or optical waveguide propagating the exciting light preferably has a single mode at the frequency of the exciting light. In the case of carry out detection on a very small amount of a liquid-borne sample using fluorescence analysis, it is preferable to narrow down the exciting light as much as possible, and thus increase the energy used in the fluorescence reaction. In this case, the exciting light used for producing the fluorescence preferably has a Gaussian distribution; exciting light exiting from a single mode optical fiber or optical waveguide will always have a Gaussian distribution, and hence such a single mode optical fiber or optical waveguide is suitable for making the focal point of the exciting light small. It is thus preferable to use an optical fiber or optical waveguide that propagates the exciting light with a single mode.

Industrial Applicability

As described in detail above, according to a microchemical system chip of the present invention, at least one of an introducing lens and a light-receiving lens is comprised of a rod lens; as a result, the lens can easily be held and the optical axis of the lens can easily be adjusted, and moreover the lens can be reduced in size, whereby the microchemical system can be reduced in size.

According to the microchemical system chip of the present invention, at least one of the introducing lens and the light-receiving lens may be comprised of a gradient index rod lens; as a result, the lens can be made yet smaller in size, and moreover because such a gradient index rod lens has flat end faces, adjustment of the optical axis of the lens can be made yet easier.

According to the microchemical system chip of the present invention, at least one of the introducing lens and the light-receiving lens may be provided inside a plate-shaped member; as a result, propagation of light between a channel and the at least one of the introducing lens and the light-receiving lens can be carried out reliably, and hence the measurement sensitivity can be improved, while the system can be reduced in size.

According to the microchemical system chip of the present invention, at least one of the introducing lens and the light-receiving lens may be provided on a surface of the plate-shaped member; as a result, propagation of light between the channel and the at least one of the introducing lens and the light-receiving lens can be carried out reliably.

According to the microchemical system chip of the present invention, a guiding optical system may be comprised of an optical fiber; as a result, the detecting light can be propagated to the vicinity of the channel in the plate-shaped member reliably, and hence the measurement sensitivity can be improved, while the microchemical system can be reduced in size.

According to the microchemical system chip of the present invention, the guiding optical system may be comprised of an optical waveguide; as a result, the detecting light can be propagated to the vicinity of the channel in the plate-shaped member reliably, and hence the measurement sensitivity can be improved, while the microchemical system can be reduced in size.

According to a microchemical system chip of the present invention, each of an introducing lens and a light-receiving lens is provided inside a plate-shaped member and is comprised of a rod lens; as a result, detecting light can be propagated reliably along a channel over a sufficient length for detection, and the detecting light that has passed through the channel can be propagated reliably to the light-receiving lens, and hence the measurement sensitivity can be improved, while the microchemical system can be reduced in size.

According to the microchemical system chip of the present invention, each of the introducing lens and the light-receiving lens may be comprised of a gradient index rod lens; as a result, each lens can be made yet smaller in size, and moreover because such a gradient index rod lens has flat end faces, adjustment of the optical axis of each lens can be made yet easier, and hence each lens can be installed in the plate-shaped member easily.

According to the microchemical system chip of the present invention, a guiding optical system may be comprised of an optical fiber; as a result, the detecting light can be propagated to the vicinity of the channel in the plate-shaped member reliably, and hence the measurement sensitivity can be improved, while the microchemical system can be reduced in size.

According to the microchemical system chip of the present invention, the guiding optical system may be comprised of an optical waveguide; as a result, the detecting light can be propagated to the vicinity of the channel in the plate-shaped member reliably, and hence the measurement sensitivity can be improved, while the microchemical system can be reduced in size.

According to the microchemical system chip of the present invention, the plate-shaped member may be made of glass; as a result, durability and chemical resistance can be improved.

According to a microchemical system of the present invention, the measurement sensitivity for absorptiometry can be improved, and moreover the microchemical system can be reduced in size.

According to a microchemical system chip of the present invention, one of an introducing lens and a light-receiving lens is comprised of a rod lens; as a result, the lens can easily be held and the optical axis of the lens can easily be adjusted, and moreover the lens can be reduced in size, whereby the microchemical system can be reduced in size. In addition, one of the introducing lens and the light-receiving lens is provided inside a plate-shaped member; as a result, propagation of light between a channel and the one of the introducing lens and the light-receiving lens can be carried out reliably, and hence the measurement sensitivity can be improved, while the microchemical system can be reduced in size.

According to the microchemical system chip of the present invention, the rod lens may be comprised of a gradient refractive index lens; as a result, the lens can be reduced in size, and hence the system can be reduced in size, and moreover because such a gradient refractive index lens has flat end faces, adjustment of the optical axis of the lens can be made easier, and hence the lens can be installed in the plate-shaped member easily.

According to the microchemical system chip of the present invention, exciting light may be introduced into a plurality of channels from one lens; as a result, the microchemical system can be reduced in size.

According to the microchemical system chip of the present invention, the introducing lens may be comprised of a gradient index rod lens; as a result, the lens can be reduced in size, whereby the microchemical system can be reduced in size, and moreover because such a gradient index rod lens has flat end faces, adjustment of the optical axis of the lens can be made yet easier, and hence the lens can be installed in the plate-shaped member easily.

According to the microchemical system chip of the present invention, guiding optical systems may each be comprised of an optical fiber; as a result, the exciting light can be propagated to the vicinity of the channels in the plate-shaped member reliably, and moreover received fluorescence can be propagated reliably, and hence the measurement sensitivity can be improved, while the microchemical system can be reduced in size.

According to the microchemical system chip of the present invention, the guiding optical systems may each be comprised of an optical waveguide; as a result, the exciting light can be propagated to the vicinity of the channels in the plate-shaped member reliably, and moreover the received fluorescence can be propagated reliably, and hence the measurement sensitivity can be improved, while the microchemical system can be reduced in size.

According to a microchemical system of the present invention, the measurement sensitivity for fluorescence analysis can be improved, and moreover the microchemical system can be reduced in size.

## Claims

1. A microchemical system chip for use in a microchemical system that carries out detection by absorptiometry on a product produced through processing of a sample in a liquid, the microchemical system chip **characterized by** comprising a transparent plate-shaped member having therein a channel through which the liquid containing the sample is passed, an introducing lens through which light is introduced onto the liquid in said channel, and a light-receiving lens through which light exiting from said channel is received, wherein at least one of said introducing lens and said light-receiving lens comprises a rod lens.

2. A microchemical system chip as claimed in claim 1, **characterized in that** at least one of said introducing lens and said light-receiving lens comprises a gradient index rod lens.

3. A microchemical system chip as claimed in claim 1, **characterized in that** at least one of said introducing lens and said light-receiving lens is provided inside said plate-shaped member.

4. A microchemical system chip as claimed in claim 1, **characterized in that** at least one of said introducing lens and said light-receiving lens is provided on a surface of said plate-shaped member.

5. A microchemical system chip as claimed in claim 1, **characterized in that** a guiding optical system is connected to each of said introducing lens and said light-receiving lens.

6. A microchemical system chip as claimed in claim 5, **characterized in that** said guiding optical system comprises an optical fiber.

7. A microchemical system chip as claimed in claim 5, **characterized in that** said guiding optical system comprises an optical waveguide.

8. A microchemical system chip for use in a microchemical system that carries out detection by absorptiometry on a product produced through processing of a sample in a liquid, the microchemical system chip **characterized by** comprising a transparent plate-shaped member having therein a channel through which the liquid containing the sample is passed, an introducing lens through which detecting light is introduced from an end of said channel into said channel in a longitudinal direction of said channel, and a light-receiving lens through which is received the introduced detecting light exiting from another end of said channel, wherein each of said introducing lens and said light-receiving lens is provided inside said plate-shaped member and comprises a rod lens.

9. A microchemical system chip as claimed in claim 8, **characterized in that** each of said introducing lens and said light-receiving lens comprises a gradient index rod lens.

10. A microchemical system chip as claimed in claim 8, **characterized in that** a guiding optical system is connected to each of said introducing lens and said light-receiving lens.

11. A microchemical system chip as claimed in claim 10, **characterized in that** said guiding optical system comprises an optical fiber.

12. A microchemical system chip as claimed in claim 10, **characterized in that** said guiding optical system comprises an optical waveguide.

13. A microchemical system chip as claimed in claim 1, **characterized in that** said plate-shaped member is made of glass.

14. A microchemical system **characterized by** comprising a microchemical system chip as claimed in claim 1 or 8, introducing means for introducing detecting light onto said introducing lens, receiving means for receiving from said light-receiving lens detecting light received by said light-receiving lens, and calculating means for calculating an intensity of the received detecting light.

15. A microchemical system chip for use in a microchemical system that carries out detection by fluorescence analysis on a product produced through processing of a sample in a liquid, the microchemical system chip **characterized by** comprising a transparent plate-shaped member having therein a channel through which the liquid containing the sample is passed, an introducing lens through which exciting light is introduced into said channel from a direction orthogonal to said channel, and a light-receiving lens through which is received fluorescence emitted from the sample in the liquid flowing through said channel due to the introduced exciting light, wherein one of said introducing lens and said light-receiving lens is provided inside said plate-shaped member, and the other of said introducing lens and said light-receiving lens is provided on a surface of said plate-shaped member, and one of said introducing lens and said light-receiving lens comprises a rod lens.

16. A microchemical system chip as claimed in claim 15, **characterized in that** said rod lens comprises a gradient refractive index lens.

17. A microchemical system chip as claimed in claim 15, **characterized in that** the other one of said introducing lens and said light-receiving lens comprises a rod lens.

18. A microchemical system chip as claimed in claim 15, **characterized in that** the other one of said introducing lens and said light-receiving lens comprises a planar lens.

19. A microchemical system chip as claimed in claim 17, **characterized in that** the other one of said introducing lens and said light-receiving lens comprises a gradient refractive index lens.

20. A microchemical system chip as claimed in claim 15, **characterized in that** said light-receiving lens is provided inside said plate-shaped member, and said introducing lens is provided on the surface of said plate-shaped member.

21. A microchemical system chip as claimed in claim 15, **characterized in that** said channel comprises a plurality of channels arranged along an optical axis of the introduced exciting light, said introducing lens is provided inside said plate-shaped member, and said light-receiving lens comprises a plurality of lenses each provided on the surface of said plate-shaped member facing one of said plurality of channels.

22. A microchemical system chip as claimed in claim 21, **characterized in that** said introducing lens comprises a gradient refractive index lens.

23. A microchemical system chip as claimed in claim 21, **characterized in that** said light-receiving lenses each comprise a rod lens.

24. A microchemical system chip as claimed in claim 21, **characterized in that** said light-receiving lenses each comprise a planar lens.

25. A microchemical system chip as claimed in claim 23, **characterized in that** said light-receiving lenses each comprise a gradient refractive index lens.

26. A microchemical system chip as claimed in claim 15, **characterized in that** a guiding optical system is connected to each of said introducing lens and said light-receiving lens.

27. A microchemical system chip as claimed in claim 26, **characterized in that** said guiding optical system comprises an optical fiber.

28. A microchemical system chip as claimed in claim 26, **characterized in that** said guiding optical system comprises an optical waveguide.

29. A microchemical system chip as claimed in claim 15, **characterized in that** said plate-shaped member is made of glass.

30. A microchemical system **characterized by** comprising a microchemical system chip as claimed in claim 15, introducing means for introducing the exciting light into said introducing lens, receiving means for receiving from said light-receiving lens the fluorescence received by said light-receiving lens, and measuring means for measuring an intensity of the received fluorescence.

## FIG. 1A

## FIG. 1B

## FIG. 2

LIGHT SOURCE → [20] → MICROCHEMICAL SYSTEM CHIP [1] → [17] → OPTICAL RECEIVER [21] → [22] → RECEIVED LIGHT INTENSITY CALCULATOR → [23] RECORDER

16

EP 1 489 403 A1

14

## FIG. 3A

## FIG. 3B

## FIG. 4

## FIG. 5

| LASER LIGHT SOURCE | MICROCHEMICAL SYSTEM CHIP | SIGNAL PROCESSOR | RECORDER |

## FIG. 6

# FIG. 7

## INTERNATIONAL SEARCH REPORT

| International application No. |
|---|
| PCT/JP03/03073 |

**A. CLASSIFICATION OF SUBJECT MATTER**
Int.Cl$^7$ G01N21/05, G01N37/00, G01N21/64, G01N21/59

According to International Patent Classification (IPC) or to both national classification and IPC

**B. FIELDS SEARCHED**

Minimum documentation searched (classification system followed by classification symbols)
Int.Cl$^7$ G01N21/00-21/74, G01N37/00

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2003 |
| Kokai Jitsuyo Shinan Koho | 1971-2003 | Jitsuyo Shinan Toroku Koho | 1996-2003 |

Electronic data base consulted during the international search (name of data base and, where practicable, search terms used)
PATOLIS

**C. DOCUMENTS CONSIDERED TO BE RELEVANT**

| Category* | Citation of document, with indication, where appropriate, of the relevant passages | Relevant to claim No. |
|---|---|---|
| Y | JP 1-97841 A (Hitachi, Ltd.), 17 April, 1989 (17.04.89), Full text (Family: none) | 1-14 |
| Y | JP 5-196565 A (Millipore Corp.), 06 August, 1993 (06.08.93), Full text (Family: none) | 5-7,10-12, 26-28 |
| Y | WO 96/34282 A (Pharmacia Biotech AB.), 31 October, 1996 (31.10.96), Full text & JP 11-505606 A | 15-30 |

☒ Further documents are listed in the continuation of Box C.　　☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 12 June, 2003 (12.06.03) | 01 July, 2003 (01.07.03) |

| Name and mailing address of the ISA/ | Authorized officer |
|---|---|
| Japanese Patent Office | |
| Facsimile No. | Telephone No. |

Form PCT/ISA/210 (second sheet) (July 1998)

18

<table>
<tr><td colspan="2" align="center">**INTERNATIONAL SEARCH REPORT**</td><td>International application No.</td></tr>
<tr><td colspan="2"></td><td>PCT/JP03/03073</td></tr>
</table>

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | EP 1106987 A (F. Hoffmann-La Roche AG.),<br>13 June, 2001 (13.06.01),<br>Full text<br>& JP 2001-183291 A  & AT 202899 A | 4,15-30 |
| Y | JP 7-83900 A (Canon Inc.),<br>31 March, 1995 (31.03.95),<br>Full text<br>(Family: none) | 2,9,16,17,<br>22,23,25 |
| Y | JP 9-196739 A (Teramecs Co., Ltd.),<br>31 July, 1997 (31.07.97),<br>Full text<br>(Family: none) | 21-25 |
| Y | JP 5-240872 A (Canon Inc.),<br>21 September 1993 (21.09.93),<br>Full text<br>(Family: none) | 21-25 |
| Y | Microfilm of the specification and drawings annexed<br>to the request of Japanese Utility Model Application<br>No. 18660/1973(Laid-open No. 122877/1974)<br>(Hitachi, Ltd.),<br>21 October, 1974 (21.10.74),<br>Full text<br>(Family: none) | 21-25 |
| Y | WO 00/39573 A (Micronics, Inc.),<br>06 July, 2000 (06.07.00),<br>Full text<br>& JP 2002-533719 A | 1-30 |

Form PCT/ISA/210 (continuation of second sheet) (July 1998)